# EUROPEAN PATENT SPECIFICATION

(11) **EP 0 409 309 B1**
(45) Date of publication and mention of the grant of the patent: **01.06.1994**
(21) Application number: 90201826.6
(22) Date of filing: 09.07.1990
(51) Int. Cl.: G03B 27/62, G03G 15/00

(54) **Apparatus for recirculating originals**
Vorlagen-Handhabungseinrichtung vom Umlauftyp
Appareil de recirculation d'originaux

(30) Priority: 20.07.1989 NL 8901873
(43) Date of publication of application: 23.01.1991
(73) Proprietor: Océ-Nederland B.V., 5914 CC Venlo (NL)
(72) Inventor: Van Rijn, Gerardus Lodewijk Joseph, NL-5943 AW Lomm (NL)
(74) Representative: Hanneman, Henri W., Dr.

(56) References cited:
- EP-A- 0 078 166
- EP-A- 0 078 680
- EP-A- 0 211 462
- US-A- 4 238 126

## Description

This invention relates to apparatus for recirculating originals from a stack thereof to an exposure zone of a copying machine and back from the exposure zone to the stack of originals, comprising a cassette for the stack of originals, a feed path extending from the bottom of the cassette to a first side of the exposure zone for feeding an original from the cassette to the exposure zone, conveying means for conveying the original in a first conveyor path through the exposure zone, a discharge path extending from a second side of the exposure zone to the top of the cassette for discharging the original from the exposure zone to the cassette, with reversal of the original, a second conveyor path extending from the exposure zone to the discharge path and a sheet conveyor member in the discharge path, the direction of conveyance of which is reversible for reversing the direction of movement of the original.

An apparatus of this kind is known from European Patent 0 078 680, which describes an apparatus in which the sheet conveyor member is disposed on the second side of an exposure platen forming the exposure zone, such second side being remote from the feed path, the second conveyor path extending from the said second side in the direction of the cassette to discharge the original to the cassette without reversal of the original, a return path, for directly returning an original from and to the exposure platen - with reversal of the original - extending from said second side to the first side of the exposure platen situated opposite said second side, the said return path and second conveyor path extending between the first conveyor path over the exposure platen and the discharge path.

In this known apparatus, therefore, an original must be capable of moving at three levels above the exposure platen namely:
- through the first conveyor path directly over the exposure platen,
- through that portion of the discharge path which is situated thereabove and
- through that portion of the second conveyor path and of the return path which is situated between the first conveyor path over the exposure platen and the discharge path.

To enable a jammed original to be removed, the first conveyor path over the exposure platen and the two paths thereabove must each be separately accessible, and this necessitates a complex construction.

The object of this invention is to provide an apparatus of the type referred to in the preamble without this disadvantage.

According to the invention this object is attained in that in an apparatus according to the preamble the second conveyor path extends from the first side of the exposure zone to the discharge path for conveying the original without reversal and in that the sheet conveyor member in the discharge path is disposed past the location where the second conveyor path leads into the discharge path. Consequently, there is only one path above the first conveyor path through the exposure zone, so that these paths can readily be made accessible.

Also, an original returning to the cassette through the discharge path until just before it reaches the cassette can still be returned directly to the exposure zone by reversing the direction of the conveyance of the sheet conveyor member disposed near the cassette.

In one embodiment of an apparatus according to the invention, the direction of conveyance of the conveying means for conveying the original in the first conveyor path is reversible. Consequently, the total path length required is short, thus reducing the risk of originals jamming. This is particularly the case in an apparatus in which the exposure zone is adapted to position the entire original therein. Also, an original can be discharged directly from the exposure zone via the second conveyor path to the cassette without reversal of the original and, by reversing the direction of conveyance of the sheet conveyor member, can be directly returned to the exposure zone until just before it reaches the cassette.

The invention will be explained hereinafter with reference to the accompanying drawings wherein:
Fig. 1 diagrammatically represents an apparatus for recirculating originals according to the prior art,
Fig. 2 diagrammatically illustrates a first embodiment of an apparatus according to the invention, and
Fig. 3 diagrammatically illustrates a second embodiment of an apparatus according to the invention.

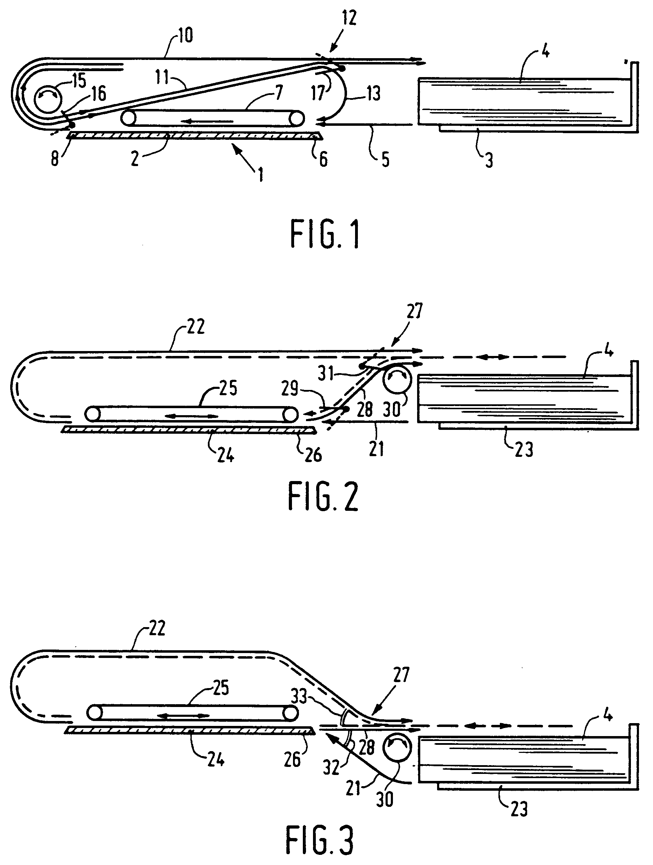

The known apparatus shown in Fig. 1 comprises an exposure zone 1 in which is disposed an exposure platen 2 of a copying machine not shown in greater detail. Disposed next to the exposure platen 2 is a cassette 3 in which a stack 4 of originals to be copied can be placed. A feed path 5 extends from the bottom of the cassette 3 to the feed side 6 of the exposure platen 2, which side is situated closest to the cassette 3, for feeding an original to the exposure platen 2 without reversal, such original being separated from the bottom of the stack 4. The feed path 5 and the conveyor paths to be described hereinafter are indicated diagramatically by arrows in the drawings, those arrows which are drawn parallel to one another and close together denoting the same path, the head of the arrow indicating the direction in which an original can be advanced in the said path by means not shown.

A conveyor belt 7 cooperates with the exposure platen 2 in order to transport an original over said platen from the feed side 6 to the discharge side 8 of the exposure platen 2 situated opposite said feed side.

A first discharge path 10 extends from the discharge side 8 of the exposure platen 2 to the top of the cassette 3. This first discharge path 10 comprises a semi-circularly curved portion which adjoins the discharge side 8 and a straight portion which extends from the curved portion to the cassette 3. A second discharge path 11 also extends like the first discharge path 10 from the discharge side 8 of the exposure platen 2 to the cassette 3. This second discharge path 11 contains that portion of the discharge path 10 which adjoins the discharge side 8 of the exposure platen 2, a portion which extends between said discharge side 8 and a location 12 in the first discharge path 10 which is situated approximately straight above the feed side 6 of the exposure platen 2, which portion is situated between the exposure platen 2 and the straight portion of the first conveyor path 10.

The known apparatus also comprises a return path 13 extending from the discharge side 8 of the exposure platen 2 to the feed side 6 of exposure platen 2, which return path 13 is formed by that portion of the first discharge path 10 which adjoins the discharge side 8, that portion of the second discharge path 11 which extends between the discharge side 8 and location 12 of the first discharge path 10 and a semi-circularly curved portion which extends between location 12 and feed side 6 of the exposure platen.

A sheet conveyor roller 15 is disposed at the curved portion of the first discharge path 10 and its direction of conveyance is reversible. In addition a sheet deflector 16 is disposed at the discharge side 8 and can be set into a position in which an original fed in the direction of the exposure platen 2 by the sheet conveyor roller 15 is guided in the direction of location 12, and a sheet deflector 17 is disposed at location 12 and can be set into a position in which an original is returned to the exposure platen 2.

This apparatus known from European patent 0 078 680 is suitable for processing originals printed on one side and both sides.

Originals printed on one side are fed one by one from stack 4 to the exposure platen 2 and from there back to the stack 4 via the second discharge path 11.

Originals printed on both sides can be processed in two ways:
a. The originals are fed one by one from stack 4 to the exposure platen 2 where one side of the originals is exposed, and from there via the first discharge path 10 back to the stack 4. After all the originals of the stack 4 have been exposed on one side, the originals are again fed to the exposure platen 2 one by one from stack 4, where the other side of the originals is now exposed, and from there back via the first discharge path 10 to the stack 4. The originals in the stack 4 are then again in the same orientation as that in which they were inserted.
b. The originals are fed one by one to the exposure platen 2 from stack 4. After one side has been exposed, each original is returned via return path 13 to the exposure platen 2 for exposure of the other side. Subsequently, each original is returned to stack 4 via the first discharge path 10.

Method a. is suitable for use in a copying machine in which copy sheets printed on one side are collected in an intermediate stack before printing the other side, and method b. is suitable for use in a copying machine in which all copy sheets are printed on both sides directly after one another.

The known apparatus shown in Fig. 1 has a number of disadvantages. One such disadvantage is that that portion of the second discharge path 11 and of the return path 13 respectively which extends between the discharge side 8 and the location 12 where said discharge path 11 and return path 13 respectively lead into the first discharge path 10 is difficultly accessible, for example, for removal of an original jammed in such portion. The conveyor system above the exposure platen 2 must, for example, be adapted to hinge up in portions for the purpose.

Another disadvantage is that three conveyor paths extend one above the other over the entire length of and above the exposure platen 2, and apart from a complex conveyor construction this means considerable risk of an original jamming in one of these long conveyor paths.

The embodiments of an apparatus according to the invention to be described hereinafter do not have these disadvantages.

In the embodiment shown in Fig. 2, a feed path 21 between a cassette 23 and an exposure platen 24, and a first discharge path 22 adjoining the discharge side of the exposure platen 24 are constructed in the same way as in the known apparatus described hereinabove. On the exposure platen 24 is a conveyor belt 25 with a reversible direction of movement. Between the feed side 26 of the exposure platen 24 and a location 27 in the first discharge path 22 situated near the cassette 23 there extends a second discharge path 28. A sheet deflector 29 is disposed at the feed side 26 of the exposure platen 24 and on movement of the conveyor belt 25 in the direction of the cassette 23 is in a position indicated with broken-line to guide into the second discharge path 28 an original fed from the exposure platen 24.

A sheet conveyor member 30, the direction of rotation of which is reversible, is disposed in the first conveyor path 22 between location 27 where the second discharge path 28 leads into the first discharge path 22, and the cassette 23. At location 27 there is disposed a sheet deflector 31 which, when the sheet conveyor roller 30 rotates in a direction opposed to the discharge direction, is placed in a position in which an original situated completely between location 27 and cassette 23 but still held fast on the conveyor roller 30, is guided into the discharge path 28.
Like the apparatus shown in Fig. 1, the apparatus shown in Fig. 2 is suitable for processing originals printed on one side and for processing originals printed on two sides in two ways. Operation is as follows:
Originals printed on one side are fed one by one from the cassette 23 via the feed path 21 to the exposure platen 24. After exposure of each original the direction of rotation of the conveyor belt 25 is reversed and sheet deflector 29 is set to the broken-line position, so that each original is returned via discharge path 28 to the cassette 23.

For processing in the first way, originals printed on two sides are fed one by one from the cassette 23 to the exposure platen 24 where one side of the original is exposed, and then from there via first discharge path 22 back to the cassette 23. After all the originals have thus been exposed on one side, they are again fed one by one from the cassette 23 to the exposure platen 24, where the other side of the original is now exposed, and from there back to the cassette 23 via the first discharge path 22.

For processing in the second way, after one side of an original printed on two sides and fed to the exposure platen 24 has been exposed, the original is fed in the first discharge path 22 and conveyed therein until the trailing edge of that original has passed location 27. The direction of rotation of the conveyor roller 30 is then reversed and sheet deflector 31 is set in the broken-line position. The original is now returned via the second discharge path 28 to the exposure platen 24 for exposure of the other side. That original is then returned via the first discharge path 22 to the cassette, whereupon a subsequent original is fed from the cassette 23 to the exposure platen 24.

The return path for directly returning an original after one side thereof has been exposed, to the exposure platen 24 for subsequent exposure of the other side of such original, is thus formed by the first discharge path 22 and the second discharge path 28. This return path is denoted by a broken line in Fig. 2. A conveyor path intended solely for the direct return of an original from and to the exposure platen 24, such as the portion of the path between location 12 in the first discharge path 10 and the feed side 6 of the exposure platen 2 in the known apparatus, is thus unnecessary.

In the event of a fault occurring in the making of a copy of an original already discharged from the exposure platen 24 in the copying machine comprising the apparatus shown in Fig. 2, but such sheet has not yet completely returned to the cassette 23, the direction of rotation of the sheet conveyor roller 30 is reversed in response to an associated fault signal when the trailing edge of an original returning to the cassette 23 is situated between location 27 and conveyor roller 30, and sheet deflector 31 is set in the broken-line position to return the original to the exposure platen 24 for re-exposure of the same side thereof. If the apparatus had been set to discharge originals via the first discharge path 22, then the original to be returned directly must, of course, pass through the return path an extra time in order to bring the original with the previously exposed side again on the exposure platen 24.

The embodiment shown in Fig. 3 is a variant of the apparatus shown in Fig. 2, like parts having like references.

In the apparatus shown in Fig. 3 the second discharge path 28, the conveyor path over the exposure platen 24, and that portion of the discharge path which, as considered in the direction of discharge, is situated past location 27, lie in one and the same plane, so that said path portions smoothly adjoin one another and the feed path 21 and the first discharge path 22 form an acute angle 32,33 respectively with the second discharge path 28. Thus when an original is discharged from the exposure platen 24 in the direction of the second discharge path 28 it is automatically guided into said path 28 and an original which is conveyed by sheet conveyor roller 30 in a direction opposite to the discharge direction is also guided automatically into path 28, i.e. without the use of sheet deflectors movable into two positions.

## Claims

1. Apparatus for recirculating originals from a stack thereof to an exposure zone of a copying machine and back from the exposure zone to the stack of originals, comprising:
- a cassette (23) for the stack of originals,
- a feed path (21) extending from the bottom of the cassette to a first side of the exposure zone (24) for feeding an original from the cassette to the exposure zone,
- conveying means (25) for conveying the original in a first conveyor path through the exposure zone,
- a discharge path (22) extending from a second side of an exposure zone to the top of the cassette for discharging the original from the exposure zone to the cassette, with reversal of the original,
- a second conveyor path (28) extending from the exposure zone to the discharge path and,
- a sheet conveyor member (30) in the discharge path, the direction of conveyance of which is reversible for reversing the direction of movement of the original,
characterised in that
- the second conveyor path (28) extends from the first side (26) of the exposure zone (24) to the discharge path (22) for conveying the original without reversal, and in that
- the sheet conveyor member (30) in the discharge path (22) is disposed past the location (27) where the second conveyor path (28) leads into discharge path (22).

2. Apparatus according to claim 1, characterised in that the direction of conveyance of the conveying means (25) for conveying the original in the first conveyor path is reversible.

3. Apparatus according to claim 1 or 2, characterised in that
- the second conveyor path (28) smoothly adjoins the first conveyor path through the exposure zone (24) and that portion of the discharge path (22) which, as considered in the discharge direction, is situated past the location (27) where the second conveyor path (28) leads into the discharge path (22), and in that
- the second conveyor path (28) forms an acute angle (32; 33) with the feed path (21), respectively with that portion of the discharge path (22) which, as considered in the discharge direction, is situated in front of the location (27) where the second conveyor path (28) leads into the discharge path (22).

## Patentansprüche

1. Vorrichtung zum Umlauffördern von Vorlagen von einem Vorlagenstapel zu einer Belichtungszone eines Kopiergerätes und zurück von der Belichtungszone zu dem Vorlagenstapel, mit:
- einer Kassette (23) für den Vorlagenstapel,
- einem vom Boden der Kassette zu einer ersten Seite der Belichtungszone (24) verlaufenden Zuführweg (21) zum Zuführen einer Vorlage von der Kassette zu der Belichtungszone,
- Fördermitteln (25) zum Fördern der Vorlage in einem ersten Förderweg durch die Belichtungszone,
- einem von einer zweiten Seite der Belichtungszone zur Oberseite der Kassette verlaufenden Ausgabeweg (22) zum Ausgeben der Vorlage von der Belichtungszone zu der Kassette, mit Wenden der Vorlage,
- einem von der Belichtungszone zu dem Ausgabeweg verlaufenden zweiten Förderweg (28) und
- einem in dem Ausgabeweg angeordneten Blatt-Förderelement (30), dessen Förderrichtung umkehrbar ist, um die Bewegungsrichtung der Vorlage umzukehren,
dadurch **gekennzeichnet,** daß
- der zweite Förderweg (28) von der ersten Seite (26) der Belichtungszone (24) zu dem Ausgabeweg (22) verläuft, um die Vorlage ungewendet zu transportieren, und daß
- das Blatt-Förderelement (30) in dem Ausgabeweg (22) hinter der Stelle (27) angeordnet ist, an der der zweite Förderweg (28) in den Ausgabeweg (22) führt.

2. Vorrichtung nach Anspruch 1, dadurch **gekennzeichnet,** daß die Förderrichtung der Fördermittel (25) zum Fördern der Vorlage in dem ersten Förderweg umkehrbar ist.

3. Vorrichtung nach Anspruch 1 oder 2, dadurch **gekennzeichnet,** daß
- sich der zweite Förderweg (28) durchgehend an den ersten Förderweg durch die Belichtungszone (24) und den Teil des Ausgabeweges (22) anschließt, der in Ausgaberichtung gesehen hinter der Stelle (27) liegt, an der der zweite Förderweg (28) in den ersten Förderweg (22) führt, und daß
- der zweite Förderweg (28) einen spitzen Winkel (32; 33) mit dem Zuführweg (21) bzw. mit dem Teil des Ausgabeweges (22) bildet, der in Ausgaberichtung gesehen vor der Stelle (27) liegt, an der der zweite Förderweg (28) in den Ausgabeweg (22) führt.

## Revendications

1. Appareil permettant de faire circuler des originaux d'une pile d'originaux à une zone d'exposition d'une machine de reproduction et, en retour, de la zone d'exposition à la pile d'originaux, comprenant :
- une cassette (23) pour la pile d'originaux,
- un trajet d'alimentation (21) s'étendant de la partie inférieure de la cassette à un premier côté de la zone d'exposition (24) et servant à faire avancer un original de la cassette à la zone d'exposition,
- des moyens de transport (25) servant à transporter l'original suivant un premier trajet de transport traversant la zone d'exposition,
- un trajet d'évacuation (22) s'étendant d'un second côté de la zone d'exposition à la partie supérieure de la cassette et servant à évacuer l'original de la zone d'exposition à la cassette, avec retournement de l'original,
- un second trajet de transport (28) s'étendant de la zone d'exposition au trajet d'évacuation, et
- un élément de transport de feuille (30) qui est disposé dans le trajet d'évacuation et dont le sens de transport peut être inversé afin d'inverser le sens de déplacement de l'original.
caractérisé en ce que :
- le second trajet de transport (28) s'étend du premier côté (26) de la zone d'exposition (24) au trajet d'évacuation (22) de façon à transporter l'original sans retournement , et en ce que
- l'element de transport de feuille (30) situé dans le trajet d'évacuation (22) est disposé au-delà de l'emplacement (27) où le second trajet de transport (28) mène au trajet d'évacuation (22).

2. Appareil suivant la revendication 1, caractérisé en ce que le sens de transport des moyens de transport (25) servant à transporter l'original suivant le premier trajet de transport peut être inversé.

3. Appareil suivant l'une des revendications 1 et 2, caractérisé en ce que :
- le second trajet de transport (28) est raccordé d'une manière douce au premier trajet de transport passant par la zone d'exposition (24) et à la partie du trajet d'évacuation (22) qui, considérée dans le sens d'évacuation, est située au-delà de l'emplacement (27) où le second trajet de transport (28) mène au trajet d'évacuation (22), et en ce que
- le second trajet de transport (28) fait un angle aigu (32 ; 33) respectivement avec le trajet d'alimentation (21) et avec la partie du trajet d'évacuation (22) qui, considérée dans le sens d'évacuation, est située devant l'emplacement (27) où le second trajet de transport (28) mène au trajet d'évacuation (22).
